# EUROPÄISCHE PATENTSCHRIFT

(11) **EP 1 907 480 B1**
(45) Veröffentlichungstag und Bekanntmachung des Hinweises auf die Patenterteilung: **09.09.2009**
(21) Anmeldenummer: 06775748.4
(22) Anmeldetag: 25.07.2006
(51) Int. Cl.: C08L 91/06, C04B 28/14

(54) **O/W WACHSDISPERSIONEN UND HIERAUS ERHÄLTLICHE GIPSPRODUKTE**
O/W WAX DISPERSIONS AND PLASTER PRODUCTS OBTAINABLE FROM THEM
DISPERSIONS DE LAVAGE HUILE DANS L'EAU ET PRODUITS DE PLATRE POUVANT ETRE OBTENUS A PARTIR DESDITES DISPERSIONS

(30) Priorität: 26.07.2005 DE 102005035515
(43) Veröffentlichungstag der Anmeldung: 09.04.2008
(73) Patentinhaber: Sasol Wax GmbH, 20457 Hamburg (DE)
(72) Erfinder: MEYER, Gernot, 21224 Rosengarten (DE); HAAS, Thomas, 21423 Winsen (DE)
(74) Vertreter: Schupfner, Georg
(86) Internationale Anmeldenummer: PCT/DE2006/001293
(87) Internationale Veröffentlichungsnummer: WO 2007/012316

(56) Entgegenhaltungen:
- WO-A-02/098816
- DE-A1- 3 519 337
- DE-A1- 4 337 030
- US-A- 5 968 237

## Beschreibung

Die Erfindung betrifft wässrige Zusammensetzungen enthaltend Wachse und hieraus herstellbare Gipsprodukte, insbesondere Porengipse und Gipsplatten.

Gips ist Calciumsulfat, das mit und ohne Kristallwasser vorliegen kann. Das in der Natur vorkommende Gipsgestein ist Calciumsulfat-Dihydrat (CaSO₄ x 2H₂0), die kristallwasserfreie Form des Calciumsulfats wird häufig als Anhydrit (CaSO₄) bezeichnet. Mit "Gips" werden im Sprachgebrauch dieser Anmeldung das natürlich vorkommende Gipsgestein, die entsprechenden Produkte aus industriellen Prozessen als auch die beim Brennen dieser Ausgangsstoffe entstehenden Erzeugnisse bezeichnet.

Gips ist wegen seiner leichten Entwässerbarkeit (Dehydratation (1)) als Bau- und Werkstoff geeignet. Die Dehydratation ist ein reversibler Prozess. Bei Energieeinwirkung wird das Kristallwasser aus dem Calciumsulfat-Dihydrat teilweise oder vollständig ausgetrieben. Durch die Rückreaktion nach Wasserzusatz (Rehydratation (2)) erlangt der zuvor gebrannte, d. h. zumindest teilweise dehydratisierte Gips, unter Bildung eines kristallinen Gefüges seine Festigkeit.

| | |
|---|---|
| (CaSO₄ x 2H₂0) + T | -> (CaSO₄ x 0,5 H₂O) + 1,5 H₂O |
| (CaSO₄ x 2H₂O) + T | -> CaSO₄ + 2 H₂O |
| (1) Gipsstein + Energie | -> gebrannter Gips |
| (2) Gipsstein + Energie | <- gebrannter Gips |

Gipse aus natürlichen Vorkommen unterscheiden sich in ihrem Reinheitsgrad. Zu den natürlichen Beimengungen zählen z.B. Kalkstein (z. B. Muskowit oder Dolomit CaCO₃ x MgCO₃), Mergel, Tonminerale (z.B. Montmorillonit oder Kaolinit) und gelegentlich auch Sand, Bitumen oder verschiedene Salze. Gips ist aber auch aus verschiedenen technischen Prozessen zugänglich. Zum Beispiel entsteht Rauchgas- bzw. REA-Gips bei der Entschwefelung von Rauchgasen in hoher Reinheit.

Gipskartonplatten sind industriell gefertigte, im Wesentlichen aus Gips bestehende Bauplatten, deren Flächen und ggf. auch Längskanten mit einem fest haftenden, dem Verwendungszweck entsprechenden Karton ummantelt sind. Der kartonummantelte Gipskern kann Luftporen und Zusätze zur Erzielung bestimmter Eigenschaften enthalten.

Wesentliche mechanische Platteneigenschaften resultieren aus der Verbundwirkung von Gipskern und Kartonummantelung. Dabei wirkt der Karton als Armierung der Zugzone, wodurch in Verbindung mit dem Gipskern die erforderliche Festigkeit und Biegesteifigkeit der Gipskartonplatten erreicht wird. Es werden verschiedene Arten von Gipskarton-Bauplatten (GKB) unterschieden, z.B. solche, die mit Zusätzen versehen sind, welche die Wasseraufnahme verzögern (Gipskarton-Bauplatten - imprägniert (GKBI) und Gipskarton-Feuerschutzplatten - imprägniert (GKFI)).

Die Wasseraufnahme und Austrocknungszeit der Gipskartonplatten wird nach DIN 18180 (2 Stunden Wasserlagerung) geprüft.

| | GKB/GKF | GKBI/GKFI |
|---|---|---|
| Wasseraufnahme in Masse-% | 30 - 50 | < 10 |
| Austrocknungszeit in h | 70 | 15 |

Gipskartonplatten werden aus Gips und Zusatzstoffen für den Gipskern sowie hochwertigem, mehrfach vergautschtem Karton auf großen Bandanlagen im kontinuierlichen Betrieb hergestellt. Häufig wird Stuckgips (Niederbrand-Gips, hergestellt bei Temperaturen von etwa 120°C bis 180°C) eingesetzt. Der Produktionsprozess umfasst folgende Schritte:
- Zulauf des Kartons unten,
- Zulauf von Gipsbrei mit Verteilung durch die Formstation mit gleichzeitigem Kartonzulauf von oben als obere Deckschicht,
- Abbindestrecke,
- Eintrag in einen Trockner (i.d.R. nach vorheriger Zerteilung in Platten) und
- Austrag und ggf. Besäumung der Querkanten und Plattenbündelung.

Daneben gibt es als Gipsbaustoffe auch Wandbauplatten aus Gips, kurz "Gips-Wandbauplatten" genannt. Dies sind werkmäßig aus Stuckgips und Wasser hergestellte Bauelemente für nicht tragende Bauteile. Gips-Wandbauplatten können Fasern, Füll- und Zuschlagstoffe sowie andere Zusätze enthalten und zur optischen Unterscheidung mit Pigmenten gefärbt sein. Sie besitzen ebene Sichtflächen und sind an den Stoß- und Lagerflächen wechselseitig mit Nut und Feder ausgebildet. Auch hier sind hydrophobierte Platten bekannt.

Die Herstellung der Platten erfolgt in weitgehend automatisierten Produktionsanlagen. In einem Dosier- und Mischaggregat wird aus Stuckgips und Wasser sowie ggf. Zusätzen ein homogener, fließfähiger Brei hergestellt und in die Formenkästen der Gipsplattenmaschine gefüllt. Nach dem Verfestigen der Masse werden die Platten hydraulisch ausgestoßen und zum Trockner befördert. Anschließend erfolgt die Trocknung in beheizten Durchlauf-Trocknern. Nach dem Trocknen werden die Platten zu Plattenpaketen zusammengeführt oder auf Paletten verpackt.

Als Bauplatten auf der Basis von Gips seien weiterhin Gipsfaserplatten genannt.

Die Herstellung von Gips mit niedrigen Rohdichten, insbesondere von so genannten Schaum- oder Porengipsen, ist Gegenstand vieler Patente und Veröffentlichungen. Die bisher bekannten Lösungen lassen sich dabei generell in zwei Gruppen einteilen:
(1) Einsatz von Gasbildnern (Treibmittel), die dem Bindemittel teilweise trocken zugemischt oder diesem ganz- oder teilweise erst im Prozess der Herstellung des Porengipses über das Anmachwasser zugegeben werden. Die Gasbildner bestehen meist aus mehreren Materialkomponenten, bei denen durch das Wasser eine chemische Reaktion, verbunden mit dem Entstehen eines Gases, ausgelöst wird. Die entstehenden Gasblasen treiben den Gipsbrei in der Form auf.
(2) Untermischen eines separat aufbereiteten Schaums, der dem Mischgut im Mischer zugesetzt wird und sofort eine Porenbildung in dem angemachten Materialbrei hervorruft. Die Schaumerzeugung erfolgt meist durch Verdüsen von mit oberflächenaktiven Stoffen (Tensiden) angereichertem Wasser und Luft.

Bekannt ist auch, dass nach den genannten Verfahren hergestellte Porengipskörper zusätzlich hydrophob ausgerüstet werden. Dabei werden in der Phase der Mischgutaufbereitung in dem Mischer hydrophob wirkende Zusätze zugesetzt.

Gipsprodukte, besonders Gipskartonplatten, werden für den Einsatz in Feuchtbereichen mit Zusätzen versehen, die die Wasseraufnahme verzögern. In der Regel werden die imprägnierenden Zusätze der Gipsmischung vor Herstellung der Gipsprodukte zugemischt und homogen in diese eingearbeitet, worauf die Gipsmischungen i.d.R. in Schichten bei erhöhter Temperatur von z.B. 100 bis 150°C getrocknet und dann abgekühlt werden. Sind die Gipsplatten mit Kartonage kaschiert, werden diese Gipskartonplatten genannt.

Die Einwirkung von Feuchte kann ohne geeignete Hydrophobierung des Gipses zur Erschlaffung des Kartons führen, woraus sich Verformungen ergeben können. Die Verwendung von Gipskartonplatten in Feuchträumen wie Badezimmer, Waschküchen und dergleichen ist daher wegen der sich verringernden Festigkeit und der Verformung problematisch. Dies wirkt sich insbesondere dann schwerwiegend aus, wenn die Gipskartonplatten beispielsweise mit keramischen Fliesen beklebt sind. Durch die Feuchtigkeit weicht der Karton auf, verliert seine innere Festigkeit und unter dem Gewicht der keramischen Platten spaltet sich der Karton auf und die mit den Platten verbundene Kartonschicht fällt herab. Die Zerstörung der restlichen Gipskartonplatte ist dann nur noch eine Frage der Zeit.

Zusätzlich zu der sich verringernden Festigkeit und der Verformung können Korrosions- und Schimmelpilzbildung die Zerstörung beschleunigen. Selbst die ganzflächig aufgebrachte Klebeschicht für die keramischen Fliesen, die meistens auf Kunststoffbasis bereitet wird, vermag die Wirkung der Feuchte nicht zu hemmen.

Bekannt ist, für die Imprägnierung Silikon- bzw. Siloxanemulsionen / -dispersionen einzusetzen. Darüber hinaus sind Wachsdispersionen auf der Grundlage von Paraffinen, oder Montanwachsen bekannt. Es werden aber auch Polymere und Harze verwendet, die nicht zur Klasse der Wachse zählen. Als Polymere seien Polyvinylalkohole genannt. Die Wachskomponenten werden zum Teil auch als Pulver der Gipsmasse zugegeben. Ebenfalls aus der Patentliteratur bekannt sind Gemische aus Asphalt- bzw. Bitumendispersionen, z.T. eingesetzt in Kombination mit Polyvinylalkoholen, denen eine Siliconverbindung oder die Emulsion eines synthetischen Harzes zum Gips zugegeben wurden.

Es ist jedoch schwierig, ein befriedigend wasserabstoßendes bzw. hydrophobes Produkt zu erhalten, das ausreichend hydrophobiert ist und gleichzeitig die erforderliche Schaumstabilität zur Herstellung eines porigen Produktes ermöglicht.

Das U.S.-Patent 3,935,021 beschreibt eine Gips-Wandbauplatte, bei der Polyvinylalkohol und eine Wachs-Asphalt-Emulsion in den Kern aus Gips eingebracht sind. Wachs-Asphalt-Emulsionen werden in Gips-Wandbauplatten in großem Umfang eingesetzt, mit ihrer Verwendung sind jedoch bestimmte Nachteile verbunden.

Zur Hydrophobierung von Gipsdämmplatten sind aus US 5,968,237 wasserbasierte Wachsemulsionsformulierungen bekannt, welche im Wesentlichen bestchen aus Kohlenwasserstoffwachs, einer Polyvinylzusammensetzung, welche hydrolysiertes Polyvinylacctat umfasst und einer Alkylsäure und/oder Alkylester, wobei die Alkylsäure und/oder der Alkylester eine Kohlenstoffkettenlänge von größer C₁₈ aufweist.

In der US-A-5,437,722 wird eine wässrige Emulsion zur Hydrophobierung von Gipsprodukten verwendet, die ein Kohlenwasserstoffwachs, ein Montanwachs und ein Emulgator/Stabilisiersystem unter Zusatz von Polyvinylalkohol umfasst.

In der WO 98/09925 ist ein geschäumtes Gipsprodukt, das durch Einschluss einer wässrigen Emulsion, die ein Kohlenwasserstoffwachs, ein Montanwachs und ein kolloidstabilisiertes Emulgatorsystem umfasst, hydrophobiert wird, beschrieben.

Weitere wässrige Wachsdispersionen zur Hydrophobierung von Gipsprodukten, die Stärke, langkettige Alkylphenole, verseifte Montan-Wachse, Tensid, Komplexierungsmittel und Paraffin-Wachse enthalten sind z.B. aus der US 6,585,820 bekannt. Ebenso nennt die US 5,695,553 Tensid, Montan-Wachs und Paraffin-Wachs als Bestandteil der wässrigen Wachsdispersion.

Aufgabe der vorliegenden Erfindung ist es, ein Hydrophobierungmittel zu finden, das sowohl für herkömmliche Gipsbaustoffe geeignet ist, als auch für die technisch kompliziertere Herstellung von Porengipsen. Weiterhin hat sich die Erfindung die Aufgabe gestellt, trotz der Hydrophobierung eine ausreichende Dampfdurchlässigkeit zu gewährleisten. Darüber hinaus soll der Wachszusatz das Fließverhalten der Gipsmasse verbessern, eine geringe Veränderung des Versteifungsverhaltens des Gipses, eine deutliche Verbesserung der Kartonhaftung und eine sehr geringe Beeinflussung der Schaumbildung im Prozess bewirken.

Die Wirkungsweise von Wachsdispersionen in Gipsprodukten hängt kritisch von der Zusammensetzung ab. Offenbar ist es wichtig, dass die innere Oberfläche der Mikroporen im Gips versiegelt wird. Die Poren dürfen dagegen nicht vollständig verschlossen sein, um die gewünschte Dampfdurchlässigkeit zu erhalten. Dies ist mit reinen Kohlenwasserstoff-Dispersionen nach diesseitigen Erkenntnissen nicht zu erreichen. In der Vergangenheit hat man hier Montanwachs in der Mischung mit Paraffinen verwendet. Das Montanwachs ist ein fossiles Hartwachs pflanzlicher Herkunft, welches den Inkohlungsprozess nahezu unverändert überstanden hat. Deshalb kommt es in einigen Braunkohlen als extrahierbarer Bestandteil vor. Wichtige chemische Parameter sind u.a. die Säure- (SZ) und Verseifungszahl (VZ) des Montanwachses. Des Weiteren sind in Montanwachsen wenige Kohlenwasserstoffe, aber in nicht unerheblichen Anteilen Montanharze und Asphaltstoffe enthalten, wobei letztere zu einem nicht unerheblichen Anteil anorganische Aschebestandteile enthalten (0,4 bis 4 Gew.%).

Montanharze und Aschebestandteile können, wenn z.B. im Sichtverbau, wo eine besonders helle Gipsfarbe gewünscht ist, zu einer Beeinträchtigung der Farbe führen. Die Kohlenwasserstoffketten in den Wachssäuren und Wachsalkoholen haben eine Kettenlänge von 20 bis 34 C-Einheiten mit einem Maximum bei ca. 30 C-Einheiten. Dabei liegt der Schwerpunkt auf den Ketten mit einer geradzahligen Anzahl an Kohlenstoffatomen.

Bei der Verwendung von Wachsdispersionen in GKBI und GKFI ist generell von besonderer Bedeutung, dass diese keinen negativen Einfluss auf die Haftung der Kartonschicht auf der Oberfläche des Gispkemes haben. Des Weiteren müssen auch die Emulgatorsysteme auf optimale Haftung der Kartonschicht und eine möglichst geringe Störung des Schaumverhaltens des Gipsbreis abgestellt sein. Überraschend wurde gefunden, dass sich der bisher überwiegend von montanwachshaltigen Wachsdispersionen bekannte Hydrophobierungseffekt in Gipsprodukten auch mit anderen speziell ausgewählten polaren synthetischen und natürlichen Komponenten erzielen lässt. Als Basiswachsphase lassen sich neben Paraffinen und den in Anspruch 1 als obligatorisch genanten polaren langkettigen Verbindungen auch längerkettige Alphaolefine (hydriert und/oder unhydriert) und Fischer-Tropsch Wachse verwenden. Ebenfalls einsetzbar in der Zusammensetzung sind Naturwachse, Fette, Fettalkohole sowie synthetische und synthetisch modifizierte natürliche Harzkomponenten.

Es zeigte sich, dass sich die gewünschte Hydrophobierung auch mit Hilfe von Wachsphasen ohne Montanwachs erzielen lässt. Dabei wurden sowohl andere Wachsphasen als auch andere polare Additive als verwendbar identifiziert. Dies führt im zu helleren / weißeren, auch im Sichtbau verwendbaren Gips-Produkten, da die Wachsphasen im speziellen die verwendeten Zusatzstoffe erheblich geringere bzw. keine Aschegehalte aufweisen und auch keine dunklen Asphalt- und Harzbestandteile enthalten.

Die erfindungsgemäße O/W-Wachsdispersion zur Verwendung in Gipsprodukten besteht aus:
- zumindest 30 Gew.%, insbesondere 30 bis 80 Gew.%, vorzugsweise zu 40 bis 65 Gew.%, Wasser,
- zumindest 20 Gew.%, insbesondere 70 bis 20 Gew.%, vorzugsweise 35 bis 60 Gew.%, Wachsphase als disperse Phase, wobei die Wachsphase oder die zur Herstellung der Wachsphase eingesetzte Summe der diese bildenden Stoffe (d.h. vor der ggf. weiteren Verseifung durch das fakultative Alkalischmachen bzw. dem Alkali-/ Erdalkali-Zusatz) eine Verseifungszahl von größer 0,2 mgKOH/g aufweist,
- zumindest 0,1 Gew.%, insbesondere 0,5 bis 5% Gew.%, eines Emulgators oder eines Verdickungsmittels als Dispergierhilfsmittel, sowie
- maximal 20 Gew. %, insbesondere weniger als 10 Gew.% anderen Stoffen, insbesondere als Bestandteil der kontinuierlichen Phase,
wobei die Wachsphase besteht aus, jeweils bezogen auf die Wachsphase:
(a) zu 50 bis 98 Gew.% aliphatische Kohlenwasserstoffen (KW) oder deren Gemischen jeweils mit einem Erstarrungspunkt von größer 50°C und kleiner 95°C, insbesondere 55 bis 80°C,
(b) zu 2 bis kleiner 50 Gew.%, insbesondere zu 5 bis 20 Gew.%, aus polaren langkettigen Verbindungen mit Kettenlängen von mindestens 18 Kohlenstoffatomen, insbesondere aliphatische, enthaltend
   - zumindest eine Carboxyl-Gruppe, ggf. teilweise oder ganz derivatisiert,
   - eine Ether-Gruppe und/oder
   - zumindest eine Hydroxylgruppe (-OH)
   pro Molekül, jedoch nicht mehr als zusammen drei der oben genannten Gruppen,
   insbesondere polare langkettige Verbindungen, die pro Molekül mindestens eine Carboxyl-Gruppe, ggf. teilweise oder ganz derivatisiert neben ggf. bis zu zwei weiteren Gruppen pro Molekül einschließlich der Carboxyl-Gruppe, ggf. derivatisiert, enthalten,
und ggf.
(c) zu maximal 10 Gew.%, insbesondere kleiner 5 und vorzugsweise kleiner 0,5 Gew.%, anderen bei Raumtemperatur festen Stoffen, insbesondere aromatenfrei, oder keine und
(d) zu maximal 3 Gew.% bei Raumtemperatur flüssigen Stoffen (bei Raumtemperatur und Normaldruck), insbesondere kleiner 1,5 Gew.%,
wobei die Wachsphase zumindest Carnaubawachs, veresterte Kolophonium-Harze und/oder Bienenwachs umfasst und wobei die Wachsdispersion einen pH-Wert von größer 11 aufweist.

Vorteilhafte Ausgestaltungen sind Gegenstand der Unteransprüche oder nachfolgend beschrieben. Weiterhin beansprucht sind Gipszusammensetzungen, wie diese eingangs beschrieben sind, enthaltend die Wachsdispersionen und die Verwendung der Wachsdispersionen in solchen Gipszusammensetzungen bzw. den eingangs beschriebenen Gipsprodukten.

Erfindungsgemäß einsetzbar als aliphatische Kohlenwasserstoffe sind Paraffine, synthetische Fischer-Tropsch Wachse und Alpha-Olefine (AO, hydriert und nichthydriert) mit einem Erstarrungspunkt von größer 50°C und kleiner 95°C und insbesondere jeweils mit mittleren C-Kettenlängen größer 25.

Polare Verbindungen im Sinne der vorliegenden Erfindung sind Verbindungen aufweisend Kohlenwasserstoffketten mit pro Molekül zusammen größer 18 C-Atomen und zumindest eine Hydroxylgruppe, eine Ether-Gruppe und/oder eine Carboxylgruppe (-C(=O)O-), ggf. auch derivatisiert, d.h. verestert oder verseift. Die polaren Verbindungen weisen nicht mehr als drei der oben genannten Gruppen bzw. insgesamt überhaupt drei polare Gruppen pro Molekül auf, insbesondere eine oder zwei Gruppen.

Die weiteren polaren Verbindungen können sein oxidierte und ggf. zusätzlich teilverseifte Fischer-Tropsch-Wachse, oxidierte Paraffine, oxidierte Polyethylene, sogenannte PE-Wachsester (zusammen oxidierte Kohlenwasserstoffe (KW) bzw. teilverseifte oxidierte KW genannt) und modifizierte natürliche und/oder synthetische Harze, sowie Naturwachse. Weiterhin sind Fette (Triglyceride) z.B. pflanzlichen Ursprunges wie Palmen-, Soja- und Rübfette geeignet. Die in den polaren Zusatzstoffen enthaltenen Säuregruppen können dabei im Laufe der Wachsdispersionsherstellung mithilfe von alkalischen Substanzen (z.B. Kali oder Natronlauge) verseift werden. Diese Laugen werden dabei überdosiert, so dass sich pH-Werte größer 11 ergeben. Dies wirkt sich zudem günstig auf die Beständigkeit der Wachsdispersionen gegenüber biologischem Abbau und Pilzbefall aus. Enthalten in der Wachsdispersion sind veresterte Kolophonium-Harze, wie Glycerin- und/oder Pentaerythrit-Maleinsäure-Kolophoniumharze, Bienenwachs und/oder Carnaubawachs, wobei die Kolophoniumharze vorzugsweise in Kombination insbesondere zusammen mit oxidierten KWs und/oder teilverseiften oxidierten KWs eingesetzt werden.

Besonders bevorzugt enthält die Wachsdispersion Carnaubawachs als Bestandteil der polaren Verbindungen, insbesondere zu 1 bis 20 Gew.%, insbesondere 1 bis 15 Gew.%, bezogen auf die Wachsphase.

Insbesondere vorteilhaft sind Mischungen der polaren Verbindungen, die enthalten als polare Verbindungen obige oxidierte Kohlenwasserstoffe (KW) bzw. teilverseifte oxidierte KW (größer 1 Gew.%) und Carnaubawachs (größer 1 Gew.%) oder obige oxidierte Kohlenwasserstoffe (KW) bzw. teilverseifte oxidierte KW (größer 1 Gew.%) und obige synthetisch modifizierte Kolophonium-Harze. Die Massenanteile sind jeweils besogen auf die Wachsphase (= 100 Gew.%).

Eine Verstärkung des Hydrophobierungseffektes wird erzielt, wenn die polaren Verbindungen als vorherrschenden Bestandteil oxidierte und ggf. zusätzlich teilverseifte Fischer-Tropsch-Wachse, oxidierte Paraffine, oxidierte Polyethylene, sogenannte PE-Wachse und als Minderbestandteil Fette (z.B. Palmfette oder Sojaöle) und/oder Fettalkohole (z.B. Nafol® 20+) enthalten. Hierdurch treten synergistische Effekte auf. Das heißt, die Reduzierung der Wasseraufnahme bei Kombinationen von Additiven verstärkt sich mehr, als aus der Summe der Einzelwirkungen zu erwarten ist.

Die Zuführung der Wachsphase in den Gipsbrei ist dabei bevorzugt in Form einer wässrigen Wachsdispersion, da die Gipsplattenproduktion auf Wasserbasis erfolgt, und die Dosierung der Wachsphase so erheblich exakter erfolgen kann. Des Weiteren sorgt die bevorzugt geringe Partikelgrösse der dispersen Wachsphase (mittlere Partikelgröße kleiner 2µm und insbesondere ungefähr 1µm) für eine besonders homogene Verteilung des Wirkstoffes im Gipsbrei.

Als Emulgator sind prinzipiell alle Typen geeignet, die für die Herstellung von Wachsdispersionen verwendet werden, d.h. nichtionische, anionische und kationische Emulgatortypen, aber auch deren Kombinationen (nichtionische mit anionisch und nichtionische mit kationisch). Insbesondere sind nichtionische und anionische Emulgatoren geeignet. Des Weiteren sind auch Emulgatoren, die die Stabilisierung über eine Verdickung der Wasserphase erzielen, geeignet. Dies können z.B. natürliche Harze (Gum Ghatti, derivatisierte Cellulosen) oder Xanthanpolymere, bzw. Polysaccharide, aber auch anorganische Substanzen vom Bentonittyp sein. Besonders geeignet als Emulgatoren sind Sulfonate wie Napthalinsulfonat und/oder Ligninsulfonat, bevorzugt zusammen mit einem Verdickungsmittel wie insbesondere Gum Ghatti.

Weiterhin können der Wachsdispersion Polyvinylalkohole zugesetzt sein, insbesondere bis 0,5 bis 4 Gew.%, bezogen auf die Wachsdispersion, die z.B. als teilhydrolisierte Ethylenvinylacetatpolymere, aber auch aus Acrylaten und anderen Polyvinylestern hergestellt, erhältlich sind. Hydrolysegrade von über 70%, insbesondere über 85% sind gewünscht, aber nicht Bedingung.

Die erfindungsgemäßen Zusammensetzungen sind vorteilhafterweise Wachsdispersionen, die mit Hilfe von Homogenisatoren hergestellt werden können. Hierbei werden zumindest zwei Phasen miteinander vermischt (Voremulsion).

Zumindest die wachshaltige Phase wird dazu über den Erstarrungspunkt erwärmt, um das Wachs zu schmelzen. Die andere Phase ist die wässrige Phase. Diese ist vorzugsweise mit dem Emulgator versetzt und wird vorteilhafterweise ebenfalls erwärmt.

Die Voremulsion wird dann im Kreis solange über z.B. Spalthomogenisatoren gefahren, bis die gewünschte Teilchengröße der Wachsphase erreicht ist. Danach wird die Emulsion über eine Kühlung auf Temperaturen unter den Erstarrungspunkt der Wachphase gebracht. Durch das Verfahren werden die einzelnen Wachspartikel der dispersen Phase in der wässrigen, kontinuierlichen Phase gleichmäßig verteilt und so eine über längere Zeit stabile Wachsdispersion erhalten. Hierbei entsteht dann die Wachsdispersion. Es handelt sich um eine Öl in Wasser(O/W)-Wachssuspension mit einem mittleren Teilchendurchmesser von insbesondere 0,1 bis 10 µm, vorteilhafterweise von 0,5 bis 2 µm. Die erfindungsgemäßen Wachsdispersion eigenen sich besonders gut zur Herstellung der eingangs beschrieben hydrophobierten Gipszusammensetzungen, insbesondere solche enthaltend oder bestehend aus aufgeschäumten Gipsen oder Porengipsen und insbesondere kaschierte Gipskartonplatten, vorzugsweise unter Verwendung der genannten Gipse.

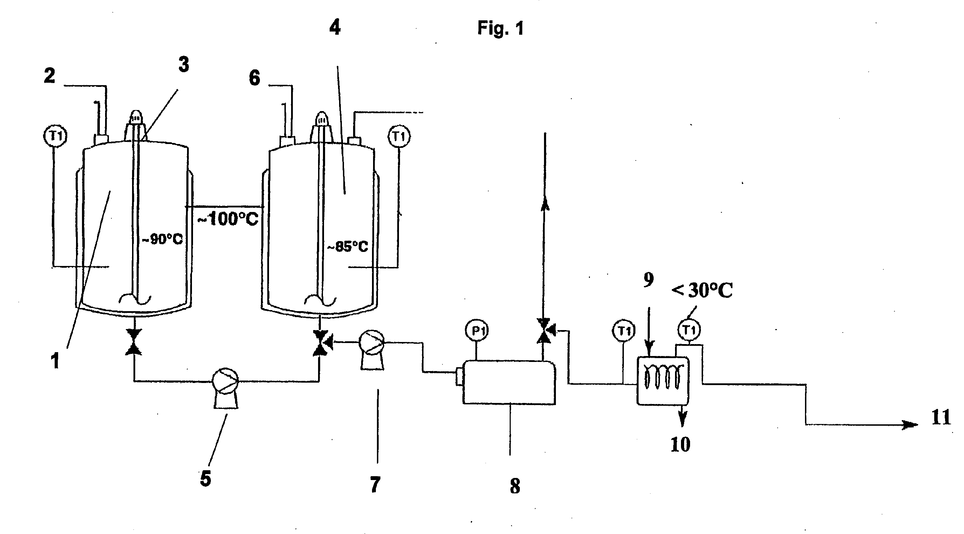

Fig. 1 zeigt, wie die O/W Emulsionen typischerweise hergestellt sind. In einem Wachskessel (1) ausgestattet mit einem Temperaturfühler und einer Temperierung werden Wachsemulgator (2), Wasser und Heißdampf (3) vorgelegt, verrührt und mittels einer Pumpe (5) in den Voremulsionskessel (4) verbracht, wo Wasseremulgator-Gemisch (6) zugefügt wird. Der Austrag und die Überführung in den Homogenisator (8) erfolgt mit der Pumpe (7). Mittels eines Kühlmediums (9) wird die Temperatur der Emulsion in der Kühlung (10) erniedrigt, z.B. auf 30°C um die fertige Wachsdispersion (11) zu erhalten.

### Experimentelles

Das Ausmaß der Hydrophobierung kann mittels Tauchtests eines Gipskörpers festgestellt werden. Hierzu wird die Wasseraufnahme in Gew.% nach einer Tauchzeit von 120 Minuten bestimmt (Spalte H₂O 120min in nachfolgender Tabelle). Geeignete Grenzwerte sind dabei < 10 Gew.% und insbesondere < 5 Gew.% Wasseraufnahme.

Die Tabelle 1 zeigt die Daten der fertigen Wachsphasen (% steht jeweils für Gew.%). Es zeigt sich, dass überwiegend harte Wachsphasen (Nadelpenetration bei 25°C < 20 [0,1 mm] gemäß ASTM D1321) mit Erstarrungspunkten zwischen 60 und 80°C sowie Säurezahlen (DIN 51558) zwischen 0 und 10 (mgKOH/g) sowie Verseifungszahlen von 0 bis 20 mgKOH/g sich günstig auf die Hydrophobierung auswirken.Dies führt zu den von der DIN 18180 geforderten Werten von < 10 Gew.% Wasseraufnahme. Die Wasseraufnahme ist somit gegenüber dem Blindwert (31%) des in diesem Fall verwendeten Naturgipses deutlich reduziert, was die Wirkung der als Wachsdispersionen eingesetzten Wachsmischungen belegt. Die Wachsdispersionen (WD) wurden gemäß folgender Richtrezeptur hergestellt:
60 Gew.% Wasser; 3 Gew.% Marlophen® NP 10 (nichtionisches Tensid der Sasol Olefins und Surfactants GmbH auf Ethoxylatbasis); 1 Gew.% KOH (45 Gew.%-ig) und 36% Wachsphase.

### Herstellung der Wachsdispersion im Labor:

Das Wasser wurde zusammen mit dem Tensid und dem KOH auf ca. 80°C erwärmt und ca. 20 min. gerührt. Danach wurde die aufgeschmolzene (80-100°C) Wachsphase hinzugegeben und 5 Minuten weitergerührt. Die Voremulsion wurde in den Homogenisator gegeben und 1 Minute im Kreis gefahren, danach wird 1 Minute lang mit einem Druck von ca. 200 bar homogenisiert. Die Wachsemulsion wurde danach auf Raumtemperatur abgekühlt, dabei verfestigen sich die Wachspartikel und es entstand die Wachsdispersion.

**Tabelle 2 :**

| | ***Eingesetzte Substanzen*** | |
|---|---|---|
| Bezeichnung | Typ | Hersteller |
| Paraffin | Sasolwax 6403 (Fully Paraffin) EP 64/66 | Sasol Wax GmbH |
| Carnaubawachs | Natürliches Palmwachs | Kahl & Co |
| Harz | Escorez 1102 F, Aliphatisches Kohlenwasserstoffharz | Exxon Mobil |

**Tabelle 1: Eigenschaften verschiedener Wachsdispersionen**

| | | | | | | | | | | | |
|---|---|---|---|---|---|---|---|---|---|---|---|
| **Nr.** | **Daten** | **EP** | **PenN25 (1)** | **SZ (2)** | **VZ (3)** | **Schaumabnahme (4)** | **H₂0 120min (5)** | **Papierhaftung (6)** | **Versteifungsbeginn (6)** | **Versteifungs-ende (6)** | **Fließmaß (6)** |
| | **Zusammensetzung Dispersion/ Einheit** | **(°C)** | **(0,1mm)** | **(mgKOH/g)** | | | | **(Gew%)** | **Min** | | **(*)** |
| ***** | Blindwert Gips | | | | | | 31 | = | 6 | 9 | = |
| **V1* **** | Montanwachs/ Paraffin | 70,5 | 10 | 3 | 8,7 | = | 2,4 | + | + 2 | +4 | Höher |
| **V2 **** | Montanwachs / Paraffin | 64,5 | 11 | 3,1 | 9 | = | 2,5 | + | + 2 | +4 | Höher |
| **1** | Carnaubawachs / Paraffin (2,5% Camauba) | 66 | 16 | 0,3 | 1,4 | = | 2,3 | + | = | +4 | Höher |
| **2** | Carnaubawachs paraffin (5%Camauba) | 65 | 11 | 0,5 | 4,1 | kleiner | 4,6 | + | + 2 | +2 | = |
| **3** | Carnaubawachs/ Harz / Paraffin- (10% Carnauba, 5% Escorez) | 67 | 11 | 1 | 8,2 | = | 3,6 | + | = | +4 | Dicker |
| **4** | Carnaubawachs / Paraffin (10 % Carnaubawachs) | 66 | 19 | 1 | 8,2 | - | 6 | - | - | - | - |

| | | | | | | | | | | | |
|---|---|---|---|---|---|---|---|---|---|---|---|
| **Legende zur Tabelle 1** *(*) Blindwert des unbehandelten Naturgipses 31 %* *(**) Diese beiden Dispersionen dienen dem Vergleich mit dem Stand der Technik* *(1) Erstarrungspunkt ASTM D 938* *(2) Nadelpenetration ASTM D 1321 bei 25°C* *(3) Säurezahl nach DIN 51558* *(4) Verseifungszahl nach DIN 51559* *(5) Wasseraufnahme nach DIN 81180* *(6) Interne Hausmethoden* + besser als Blindwert (ggf. um wie viel besser als Wert bei Gips) = gleich Blindwert - nicht gemessen | | | | | | | | | | | |

## Patentansprüche

1. O/W-Wachsdispersion bestehend aus:
- zumindest 30 Gew.% Wasser,
- zumindest 20 Gew.% Wachsphase als disperse Phase, wobei die Wachsphase oder die zur Herstellung der Wachsphase eingesetzte Summe der Stoffe eine Verseifungszahl von größer 0,2 mgKOII/g aufweist,
- zumindest 0,1 Gew.% eines Emulgator oder eines Verdickungsmittels als Dispergierhilfsmittel, sowie
- maximal 20 Gew. % anderen Stoffen,
wobei die Wachsphase besteht aus, jeweils bezogen auf Wachsphase:
(a) zu 50 bis 98 Gew.% aliphatischen Kohlenwasserstoffen (KW) oder deren Gemischen, jeweils mit einem Erstarrungspunkt von größer 50°C und kleiner 95°C,
(b) zu 2 bis kleiner 50 Gew.% aus polaren langkettigen Verbindungen mit mindestens 18 Kohlenstoffatomen enthaltend
- zumindest eine Carboxyl-Gruppe, ggf. teilweise oder ganz derivatisiert, und/oder
- eine Ether-Gruppe und/oder
- zumindest eine Hydroxylgruppe (-OH) pro Molekül, jedoch nicht mehr als zusammen drei der oben genannten Gruppen,
und ggf.
(c) zu maximal 10 Gew.% andere bei Raumtemperatur festen Stoffen und
(d) zu maximal 3 Gew.% bei Raumtemperatur flüssigen Stoffen,
wobei die Wachsphase Carnaubawachs, veresterte Kolophonium-Harze und/oder Bienenwachs umfasst und die Wachsdispersion einen pH-Wert von größer 11 aufweist.

2. Wachsdispersion nach Anspruch 1 herstellbar durch Zusammenbringen einer Wachsphase mit Wasser und zumindest einem Emulgator, homogenisieren der Zusammensetzung, wobei die Wachsphase während der Homogenisierung durch Temperaturerhöhung verflüssigt ist, und nachfolgendem Abkühlen um die Wachsphase zumindcst teilweise zu verfestigen.

3. Wachsdispersion nach einem oder mehreren der vorhergehenden Ansprüche, **dadurch gekennzeichnet, dass** größer 0 bis 10 Gew.% wasserlösliche alkalische Substanzen, ggf. zumindest teilweise gebunden durch Verseifung von Säuregruppen, enthaltend oder zugesetzt sind.

4. Wachsdispersion nach einem oder mehreren der vorhergehenden Ansprüche, **dadurch gekennzeichnet, dass** die KW ausgewählt sind aus:
- Mineralöl-Paraffinen (MP) mit im Mittel mehr als 25 Kohlenstoffatomen,
- synthetischen Alpha-Olefinen (hydriert und nicht-hydriert) (AO) mit im Mittel mehr als 30 Kohlenstoffatomen,
- Fischer-Tropsch (FT)-Wachsen mit im Mittel mehr als 25 Kohlenstoffatomen und
- deren Mischungen.

5. Wachsdispersion nach einem oder mehreren der vorhergehenden Ansprüche, **dadurch gekennzeichnet, dass** die Wachsphase oder die zur Herstellung der Wachsphase eingesetzte Summe der Stoffe vor der ggf. erfolgenden (weiteren) Verseifung oder dem (weiteren) Alkali-/Erdalkalizusatz, eine Säurezahl 0 bis 40 mgKOH/g, hat

6. Wachsdispersion nach einem oder mehreren der vorhergehenden Ansprüche, **dadurch gekennzeichnet, dass** die Wachsphase oder die zur Herstellung der Wachsphase eingesetzte Summe der Stoffe vor der ggf. erfolgenden (weiteren) Verseifung oder dem (weiteren) Alkali-/ Erdalkalizusatz, eine Verseifungszahl von größer 0,2 bis 120 mg KOH/g hat.

7. Wachsdispersion nach einem oder mehreren der vorhergehenden Ansprüche, **dadurch gekennzeichnet, dass** die Wachsphase ein Farbzahl kleiner 0,5 (nach ASTM D 1500) aufweist.

8. Wachsdispersion nach einem oder mehreren der vorhergehenden Ansprüche, **dadurch gekennzeichnet, dass** die polaren Verbindungen oxidierte KW, umfassend oxidierte FT- und/oder Polyethylen-Typen, und/oder Ether umfassen, allein oder in Mischungen.

9. Wachsdispersion nach einem oder mehreren der vorhergehenden Ansprüche, **dadurch gekennzeichnet, dass** die Wachsphase einen Erstarrungspunkt von größer 55°C bis 95°C aufweist.

10. Wachsdispersion nach einem oder mehreren der vorhergehenden Ansprüche, **dadurch gekennzeichnet, dass** der Anteil der linearen KW an den KWs größer 50 Gew.% beträgt.

11. Wachsdispersion nach einem oder mehreren der vorhergehenden Ansprüche, **dadurch gekennzeichnet, dass** die Wachsdispersion einen pH-Wert von 11 bis 13 aufweist.

12. Wachsdispersion nach einem oder mehreren der vorhergehenden Ansprüche, **dadurch gekennzeichnet, dass** die Teilchen-/ Tröpfchendurchmesser der dispersen Phase 0,1 bis 10 µm betragen.

13. Wachsdispersion nach einem oder mehreren der vorhergehenden Ansprüche, **dadurch gekennzeichnet, dass** die Wachsphase einen Nadelpenetrationswert von 7 bis 17 (nach ASTM D 1321) bei 25°C aufweist.

14. Wachsdispersion nach einem oder mehreren der vorhergehenden Ansprüche, **dadurch gekennzeichnet, dass** die Wachsdispersion eine Brookfield Viskosität bei 25 °C (ASTM D 2983) von kleiner 2000 mPas/s aufweist.

15. Wachsdispersion nach einem oder mehreren der vorhergehenden Ansprüche, **dadurch gekennzeichnet, dass** die polaren langkettigen Verbindungen aliphatisch sind.

16. Wachsdispersion nach einem oder mehreren der vorhergehenden Ansprüche, **dadurch gekennzeichnet, dass** die Wachsphase kleiner 5 Gew.% andere bei Raumtemperatur feste Stoffe enthält.

17. Wachsdispersion nach einem oder mehreren der vorhergehenden Ansprüche, **dadurch gekennzeichnet, dass** die Wachsdispersion kleiner 0,2 Gew.% substituierte Phenole enthält.

18. Wachsdispersion nach einem oder mehreren der vorhergehenden Ansprüche, **dadurch gekennzeichnet, dass** die polaren Verbindungen Carnaubawachs umfassen.

19. Wachsdispersion nach einem oder mehreren der vorhergehenden Ansprüche, **dadurch gekennzeichnet, dass** die Wachsdispersion Polyvinylalkohole umfasst, ggf. teilhydrolisierte (größer 70%).

20. Wachsdispersion nach einem oder mehreren der Ansprüche 1 bis 7, **dadurch gekennzeichnet, dass** die polaren Verbindungen aus veresterten Kolophonium-Harzen, Bienenwachs und/oder Carnaubawachs und/oder deren Mischungen, jeweils ggf. teilverseift, bestehen.

21. Wachsdispersion nach einem der vorhergehenden Ansprüche, **dadurch gekennzeichnet, dass** die Wachsdispersion weniger als 5 Gew. % Montanwachse, jeweils bezogen auf die Wachsphase, enthält.

22. Verwendung der Wachsdispersionen nach einem oder mehreren der Ansprüche 1 bis 21 zur Hydrophobierung von Gipszusammensetzungen.

23. Gipszusammensetzung enthaltend zu größer 50 Gew.% Gips, bezogen auf Calziumsulfatdihydrat, ggf. hydratisiert, und 0,1 bis 5 Gew. % der Wachsphase erhältlich durch Zugabe der Wachsdispersion gemäß einem oder mehreren der Ansprüche 1 bis 21.

24. Gipszusammensetzung nach Anspruch 23, **dadurch gekennzeichnet, dass** die Gipszusammensetzung weniger als 5 Gew. % Montanwachse, jeweils bezogen auf die Wachsphase, enthält.

## Claims

1. An O/W wax dispersion consisting of:
- at least 30 % by wt. water,
- at least 20 % by wt. wax phase as the disperse phase, wherein the wax phase or the total substances used to create the wax phase have a saponification number greater than 0.2 mgKOH/g,
- at least 0.1 % by wt. of an emulsifier or thickening agent as dispersing adjuvant, and
- maximum 20 % by wt. other substances,
wherein the wax phase consists of, the following, based on the wax phase:
(a) 50 to 98 % by wt. aliphatic hydrocarbons (HC) or mixtures thereof, each with a solidification point above 50°C and below 95 °C,
(b) 2 to below 50 % by wt. of polar, long-chain compounds with at least 18 carbon atoms, containing
- at least one carboxyl group, optionally partially or fully derivated, and/or
- an ether group and/or
- at least one hydroxy group (-OH)
per molecule, but no more than three of the afore-mentioned groups together,
and optionally
(c) maximum 10 % by wt. other substances solid at room temperature and
(d) maximum 3 % by wt. substances liquid at room temperature,
wherein the wax phase comprises carnauba wax, esterified colophonium resins and/or beeswax and the wax dispersion has a pH value greater than 11.

2. The wax dispersion according to claim 1, obtainable by bringing together a wax phase with water and at least one emulsifier, homogenising the composition,
wherein the wax phase liquefies as a result of the temperature rise during homogenisation, and subsequently cooling it to solidify the wax phase at least in part.

3. The wax dispersion according to one or more of the preceding claims, **characterised in that** over 0 to 10 % by wt. water-soluble alkaline substances, optionally at least partially bound through the saponification of acid groups, are contained or added.

4. The wax dispersion according to one or more of the preceding claims, **characterised in that** the HC's are selected from:
- petroleum paraffin (PP) with over 25 carbon atoms on average,
- synthetic alphaolefins (hydrogenated or not hydrogenated) (AO) with over 30 carbon atoms on average,
- Fisher-Tropsch (FT) waxes with over 25 carbon atoms on average and
- mixtures thereof.

5. The wax dispersion according to one or more of the preceding claims, **characterised in that** the wax phase or the total substances used to create the wax phase has a saponification number of 0 to 40 mgKOH/g before the possible (further) saponification or (further) alkali/earth alkali addition.

6. The wax dispersion according to one or more of the preceding claims, **characterised in that** the wax phase or the total substances used to create the wax phase has a saponification number of over 0.2 to 120 mgKOH/g before the possible (further) saponification or (further) alkali/earth alkali addition.

7. The wax dispersion according to one or more of the preceding claims, **characterised in that** the wax phase has a colour number below 0.5 (according to ASTM D 1500).

8. The wax dispersion according to one or more of the preceding claims, **characterised in that** the polar compounds arc oxidised HC's, comprising oxidised FT and/or polyethylene types and/or ethers, alone or in mixtures.

9. The wax dispersion according to one or more of the preceding claims, **characterised in that** the wax phase has a solidification point of over 55 °C to 95 °C.

10. The wax dispersion according to one or more of the preceding claims, **characterised in that** the proportion of HC's being linear is greater than 50 % by wt..

11. The wax dispersion according to one or more of the preceding claims, **characterised in that** the wax phase has a pH value of 11 to 13.

12. The wax dispersion according to one or more of the preceding claims, **characterised in that** the particle/droplet diameter of the disperse phase is 0.1 to 10 µm.

13. The wax dispersion according to one or more of the preceding claims, **characterised in that** the wax phase has a needle penetration value from 7 to 17 (according to ASTM D 1321) at 25°C.

14. The wax dispersion according to one or more of the preceding claims, **characterised in that** the wax dispersion has a Brookfield viscosity at 25°C (ASTM D 2983) of under 2000 mPas/s.

15. The wax dispersion according to one or more of the preceding claims, **characterised in that** the polar, long-chain compounds are aliphatic.

16. The wax dispersion according to one or more of the preceding claims, **characterised in that** the wax phase contains less than 5 % by wt. other substances that are solid at room temperature.

17. The wax dispersion according to one or more of the preceding claims, **characterised in that** the wax phase contains less than 0.2 % by wt. substituted phenols, such as alkyl phenols, preferably none.

18. The wax dispersion according to one or more of the preceding claims, **characterised in that** the polar compounds comprise carnauba wax.

19. The wax dispersion according to one or more of the preceding claims, **characterised in that** the wax dispersion comprises polyvinyl alcohols, optionally partially hydrolised (over 70 %).

20. The wax dispersion according to one or more of the claims 1 to 7, **characterised in that** the polar compounds consist of esterified colophonium resins, beeswax and/or carnauba wax and/or mixtures of these, optionally each partially saponified.

21. The wax dispersion according to one of the preceding claims, **characterised in that** the wax dispersion contains less than 5 % by wt. montan waxes relative to the wax phase in each case.

22. Use of the wax dispersion according to one or more of the claims 1 to 21 to render gypsum compositions water-repellent,

23. A gypsum composition containing over 50 % by wt. gypsum, relative to calcium sulphate dihydrate, optionally hydrated, and 0.1 to 5 % by wt. of the wax phase obtainable by adding the wax dispersion in accordance with one or more of the claims 1 to 21.

24. The wax composition according to claim 23, **characterised in that** the gypsum composition contains less than 5 % by wt. montan waxes, relative to the wax phase in each case.

## Revendications

1. Dispersion de cire H/E constituée de :
au moins 30 % en poids d'eau,
au moins 20 % en poids de phase de cire à titre de phase dispersée, la phase de cire ou la somme des substances mises en oeuvre pour la préparation de la phase de cire présentant un indice de saponification de plus de 0,2 mg de KOH/g,
- au moins 0,1 % en poids d'un émulsifiant ou d'un épaississant à titre d'auxiliaire de dispersion, ainsi que
- au maximum 20 % en poids d'autres substances,
dans laquelle la phase de cire se compose, respectivement par rapport à la phase de cire :
(a) de 50 à 98 % en poids d'hydrocarbures aliphatiques (HC) ou de leurs mélanges, ayant respectivement un point de solidification de plus de 50°C et inférieur à 95°C,
(b) de 2 à moins de 50 % en poids de composés polaires à longues chaînes ayant au moins 18 atomes de carbone, comprenant :
- au moins un groupe carboxyle, le cas échéant partiellement ou entièrement dérivatisé, et/ou
- un groupe éther et/ou
- au moins un groupe hydroxyle (-OH)
par molécule, cependant pas plus de trois des groupes susmentionnés ensemble,
et le cas échéant,
(c) de 10 % en poids au maximum d'autres substances solides à température ambiante et
(d) de 3 % en poids au maximum de substances liquides à température ambiante,
la phase de cire comprenant de la cire de carnauba, des résines de colophane estérifiées et/ou de la cire d'abeilles et la dispersion de cire présentant un pH de plus de 11.

2. Dispersion de cire selon la revendication 1, pouvant être préparée par mise en contact d'une phase de cire avec de l'eau et au moins un émulsifiant, homogénéisation de la composition, la phase de cire étant liquéfiée en augmentant la température pendant l'homogénéisation, et refroidissement consécutif pour solidifier au moins partiellement la phase de cire.

3. Dispersion de cire selon une ou plusieurs des revendications précédentes, **caractérisée en ce que** plus de 0 à 10 % en poids de substances alcalines hydrosolubles, le cas échéant au moins partiellement liées par saponification des groupes acides, sont présents ou sont ajoutés.

4. Dispersion de cire selon une ou plusieurs des revendications précédentes, **caractérisée en ce que** les HC sont choisis parmi :
- les paraffines d'huiles minérales (PM) ayant, en moyenne, plus de 25 atomes de carbone,
- les alpha-oléfines synthétiques (hydrogénées et non hydrogénées) (AO) ayant, en moyenne, plus de 30 atomes de carbone,
- les cires de Fischer-Tropsch (FT) ayant, en moyenne, plus de 25 atomes de carbone et
- leurs mélanges.

5. Dispersion de cire selon une ou plusieurs des revendications précédentes, **caractérisée en ce que** la phase de cire ou la somme des substances mise en oeuvre pour la préparation de la phase de cire a, avant la saponification (ultérieure) se produisant le cas échéant ou l'addition (ultérieure) d'alcalins /d'alcalino-terreux, un indice d'acide de 0 à 40 mg de KOH/g.

6. Dispersion de cire selon une ou plusieurs des revendications précédentes, **caractérisée en ce que** la phase de cire ou la somme des substances mise en oeuvre pour la préparation de la phase de cire a, avant la saponification (ultérieure) se produisant le cas échéant ou l'addition (ultérieure) d'alcalins /d'alcalino-terreux, un indice de saponification de plus de 0,2 à 120 mg de KOH/g.

7. Dispersion de cire selon une ou plusieurs des revendications précédentes, **caractérisée en ce que** la phase de cire présente un indice de coloration inférieur à 0,5 (d'après la norme ASTM D 1500).

8. Dispersion de cire selon une ou plusieurs des revendications précédentes,
**caractérisée en ce que** les composés polaires comprennent des HC oxydés, y compris les types oxydés de FT et/ou de polyéthylène, et/ou des éthers, seuls ou en mélanges.

9. Dispersion de cire selon une ou plusieurs des revendications précédentes, **caractérisée en ce que** la phase de cire présente un point de solidification de plus de 55°C à 95°C.

10. Dispersion de cire selon une ou plusieurs des revendications précédentes, **caractérisée en ce que** la proportion de HC linéaires par rapport aux HC est de plus de 50 % en poids.

11. Dispersion de cire selon une ou plusieurs des revendications précédentes, **caractérisée en ce que** la dispersion de cire présente un pH de 11 à 13.

12. Dispersion de cire selon une ou plusieurs des revendications précédentes, **caractérisé en ce que** les diamètres des particules / gouttelettes de la phase dispersée vont de 0,1 à 10 µm.

13. Dispersion de cire selon une ou plusieurs des revendications précédentes, **caractérisée en ce que** phase de cire présente une valeur de pénétration à l'aiguille de 7 à 17 (d'après la norme ASTM D1321) à 25°C.

14. Dispersion de cire selon une ou plusieurs des revendications précédentes, **caractérisée en ce que** la dispersion de cire présente une viscosité de Brookfield à 25°C (norme ASTM D 2983) de moins de 2000 mPas/s.

15. Dispersion de cire selon une ou plusieurs des revendications précédentes, **caractérisée en ce que** les composés polaires à longues chaînes sont aliphatiques.

16. Dispersion de cire selon une ou plusieurs des revendications précédentes, **caractérisée en ce que** la phase de cire contient moins de 5 % en poids d'autres substances solides à température ambiante.

17. Dispersion de cire selon une ou plusieurs des revendications précédentes, **caractérisée en ce que** la dispersion de cire contient moins de 0,2 % en poids de phénols substitués.

18. Dispersion de cire selon une ou plusieurs des revendications précédentes, **caractérisée en ce que** les composés polaires comprennent la cire de carnauba.

19. Dispersion de cire selon une ou plusieurs des revendications précédentes, **caractérisée en ce que** la dispersion de cire comprend des alcools polyvinyliques, le cas échéant partiellement hydrolysés (à plus de 70 %).

20. Dispersion de cire selon une ou plusieurs des revendications 1 à 7, **caractérisée en ce que** les composés polaires se composent de résines de colophane estérifiées, de cire d'abeilles et/ou cire de carnauba et/ou de leurs mélanges, respectivement le cas échéant partiellement saponifiés.

21. Dispersion de cire selon une ou plusieurs des revendications précédentes, **caractérisée en ce que** la dispersion de cire contient moins de 5 % en poids de cires de lignite, respectivement par rapport à la phase de cire.

22. Utilisation des dispersions de cire selon une ou plusieurs des revendications 1 à 21 pour l'hydrophobisation des compositions de plâtre.

23. Composition de plâtre contenant plus de 50 % en poids de plâtre, par rapport au sulfate de calcium dihydraté, le cas échéant hydraté, et 0,1 à 5 % en poids de la phase de cire pouvant être obtenue par addition de la dispersion de cire selon une ou plusieurs des revendications 1 à 21.

24. Composition de plâtre selon la revendication 23, **caractérisée en ce que** la composition de plâtre contient moins de 5 % en poids de cires de lignite, respectivement par rapport à la phase de cire.
